# NEUE EUROPÄISCHE PATENTSCHRIFT

(11) **EP 0 141 938 B2**
(45) Veröffentlichungstag und Bekanntmachung des Hinweises auf die Entscheidung über den Einspruch: **12.01.1994**
(45) Hinweis auf die Patenterteilung: 28.01.1987
(21) Anmeldenummer: 84110039.9
(22) Anmeldetag: 23.08.1984
(51) Int. Cl.: B65G 61/00, B65B 63/02

(54) **Transportbehälter sowie Verfahren undVorrichtung zum Transportieren von Dosendeckelstapeln in dem Transportbehälter**
Container and method and device for the transport of can end stacks in this container
Conteneur ainsi que méthode et dispositif pour transporter des piles de couvercles de boîtes dans ce conteneur

(30) Priorität: 26.09.1983 DE 3334769
(43) Veröffentlichungstag der Anmeldung: 22.05.1985
(73) Patentinhaber: KARGES-HAMMER-MASCHINEN GmbH & Co. KG, D-38122 Braunschweig (DE)
(72) Erfinder: Lang, Klaus E. Dr.-Ing., D-3300 Braunschweig (DE); Lauckner, Gerhard, D-3340 Wolfenbüttel (DE); Riechelmann, Dieter, D-3300 Braunschweig (DE); Baron, Hans-Jürgen, D-3340 Wolfenbüttel (DE)
(74) Vertreter: Lins, Edgar, Dipl.-Phys. Dr.jur.

(56) Entgegenhaltungen:
- EP-A- 0 101 837
- EP-A- 0 101 837
- DE-A- 2 338 306
- DE-A- 2 440 199
- DE-A- 2 532 297
- US-A- 3 766 706

## Beschreibung

Die Erfindung betrifft ein Verfahren zum Transportieren von aus Blech ausgestanzten, mit Profilrillungen versehenen, mit ihren Flachseiten aneinanderliegenden, auf ihren Kanten stehenden Dosendekkeln, die beim Aneinanderliegen jeweils in benachbarte Profilvertiefungen eingreifen, in Stapeln in einem Transportbehälter. Die Erfindung betrifft weiterhin einen zur Durchführung des Verfahrens geeigneten und hierfür verwendeten Transportbehälter sowie die Verwendung einer Vorrichtung zum Befüllen und Leeren des Transportbehälters verwendet gemäss dem erfindungsgemässen Verfahren.

Dosendeckel werden bekanntlich durch Prägung und Ausstanzung aus einem Blech hergestellt und anschliessend ringförmig gummiert. Zum Zwecke des Aushärtens der Gummierung werden die Deckel durch einen Wärmeofen transportiert, aus dem sie in Rinnen, auf ihren Kanten stehend herausgefördert werden.

Nicht immer ist es möglich, die Dosendeckel unmittelbar nach ihrer Produktion weiter zu verarbeiten, zumal häufig die Dosendeckel nicht von den Abfüllbetrieben produziert werden. Daraus ergibt sich die Notwendigkeit, die produzierten Dosendeckel zu transportieren.

Das eingangs erwähnte Verfahren ist aufgrund offenkundiger Vorbenutzung bekannt, wobei der Transport der Dosendeckel in Gitterboxen vorgenommen wurde, also in stabilen Eisenbehältern, deren Wände aus Drahtgittern gebildet sind. Diese Gitterboxen wurden manuell befüllt, wobei liegende Deckelstapel zwischen den Stirnwänden der Gitterbox gebildet wurden. Die Deckel wurden in vertikaler Richtung durch Zwischenlagen voneinander getrennt.

Es ist auch bekannt, für den Transport der Dekkel, insbesondere innerhalb eines Betriebes, geformte Paletten vorzusehen, in die die Deckelstapel eingelegt werden. Der Boden dieser Paletten ist rinnenförmig ausgestaltet, so dass die Deckelstapel eine gewisse Festlegung erfahren. Die Paletten können automatisch gefüllt werden, indem durch geeignete Abteilungen am Ausgang des Ofens Deckelstapel der benötigten Länge gebildet werden, die mit Hilfe von dachförmig ausgebildeten Magnetanordnungen ergriffen und in eine Rinne der Palette eingelegt werden.

Es ist weiterhin bekannt, die abgeteilten Deckelstapel in einen Schlauch, beispielsweise aus festem Papier, zu verpacken und dann zu transportieren.

Diese bekannten Möglichkeiten, Dosendeckel zu transportieren, weisen den Nachteil auf, dass die Dosendeckel auf dem Transport teilweise beschädigt werden. Dies gilt insbesondere für die an den stirnseitigen Begrenzungswänden der Gitterbox oder der Palette anliegenden Dosendeckel, deren Oberfläche durch das Reiben an der stirnseitigen Begrenzungswand beschädigt wird.

Eine vollautomatische Verpackung der Dosendeckel lässt sich lediglich bei den magnetisch in Paletten transportierten Deckelstapeln erreichen. Dieses bekannte Verfahren ist aber auf Paletten festgelegt und nur für magnetisierbare Dosendekkel anwendbar.

Der Erfindung liegt die Aufgabe zugrunde, eine Methode zum Transportieren von Dosendeckeln in Stapeln anzugeben, die eine automatische Verpackung ermöglicht und einen schonenden Transport der Dosendeckel gewährleistet.

Diese Aufgabe wird erfindungsgemäss durch ein Verfahren der eingangs erwähnten Art gelöst, bei dem die Deckelstapel zum Einladen in den Transportbehälter an den Enden ergriffen und in Axialrichtung des Deckelstapels um ein gewisses Mass zusammengedrückt werden und die Länge des Deckelstapels in Relation zur entsprechenden Länge des Innenraumes des Transportbehälters so gewählt wird, dass sich der Deckelstapel in dem Transportbehälter nur teilweise wieder entspannen kann, so daß die Enddeckel des Deckelstapels an den stirnseitigen Begrenzungwänden des Transportbehälters under dem Druck der elastischen Rückstellkraft des Deckelstapels anliegen.

Der Erfindung liegt die Erkenntnis zugrunde, dass die mit Profilrillungen versehenen Dosendekkel beim Aneinanderliegen mit ihren Flachseiten jeweils in die benachbarten Profilvertiefungen eingreifen. Dabei kommt es aber nicht zu einem vollflächigen Aneinanderliegen. Somit entsteht immer ein gewisser, durch die Profilanrollung bzw. Abstufungen des Dosendeckels gehaltener Abstand. Durch Druck auf die stirnseitigen Enden des Dekkelstapels, in dem die Deckel auf ihren Kanten stehen, lässt sich der Abstand der Dosendeckel um ein kleines Mass verringern. Dieses Zusammendrücken des Deckelstapels geschieht gegen eine elastische Rückstellkraft, die sich aus der Profilanrollung bzw. Abstufungen des Dosendeckels ergibt. Diese elastische Ruckstellkraft wird erfindungsgemäss für den Transport der Dosendeckel ausgenutzt. Beim Einlegen in den Transportbehälter werden die Dosendeckelstapel zusammengepresst und in diesem Zustand in den Transportbehälter verbracht. Der Deckelstapel ist so dimensioniert, dass er im zusammengedrückten Zustand etwas kürzer ist als die lichte Länge des Transportbehälters zwischen den stirnseitigen Begrenzungswänden. Im vollständig entspannten Zustand ist der Deckelstapel aber grösser als diese Länge. Das führt dazu, dass sich der Deckelstapel in dem Transportbehälter nur teilweise entspannen kann, wenn er in dem Behälter losgelassen wird. Demzufolge liegt der Deckelstapel in dem Transportbehälter unter einer gewissen Vorspannung an den stirnseitigen Begrenzungswänden an. Hierdurch ist den Enddeckeln die Möglichkeit genommen, sich beim Transport relativ zur stirnseitigen Begrenzungswand zu bewegen, so dass auch die Enddeckel beim Transport nicht beschädigt werden.

Aus der DE-A 2532297 ist ein Verfahren bekannt, bei dem Stapel zum Einladen in einen Transportbehälter an den Enden ergriffen und in Axialrichtung des Stapels um ein gewisses Mass zusammengedrückt werden und bei dem die Länge des Stapels in Relation zur entsprechenden Länge des Innenraums des Transportbehälters so gewählt wird, dass sich der Stapel nur teilweise wieder entspannen kann. Es handelt sich hierbei um ein Verfahren zur Handhabung von gefalzten Papierblattstapeln, also zum Transport von Drukkereierzeugnissen, einem Gebiet, auf dem der auf dem Gebiet der Handhabung von Dosendeckeln tätige Fachmann keine Anregungen erwartet.

Das Entladen des Transportbehälters geschieht vorzugsweise in der analogen Weise, indem der jeweilige Deckelstapel an seinen Enden ergriffen und um ein gewisses Mass zusammengedrückt wird.

Abhängig von der Länge des Deckelstapels kann es zweckmässig oder erforderlich sein, den mittleren Bereich des Deckelstapels zusätzlich zu halten, wenn der Deckelstapel an seinen Enden ergriffen und zusammengedrückt wird. Für kürzere Deckelstapel ist diese zusätzliche Halterung nicht erforderlich. Die Halterung kann durch seitlich unterhalb der Mittelachse des Deckelstapels angreifende Stangen oder durch in den Deckelstapel eingefahrene Haltemesser erfolgen.

Das erfindungsgemässe Verfahren lässt sich vollautomatisch durchführen.

Die eingangs gestellte Aufgabe wird weiterhin gelöst durch die Verwendung eines zur Durchführung des Verfahrens geeigneten, von oben zu beladenden bzw. entladenden Transportbehälters mit stirnseitigen Begrenzungswänden, an denen die Enddeckel der Deckelstapel zur Anlage kommen, wenn die Begrenzungswände in den Bereichen, in denen die Deckelstapel zur Anlage kommen, zur Innenseite der Begrenzungswände offene Nuten aufweisen, deren Breite wesentlich kleiner ist als die Breite der Deckelstapel.

Die Nuten ermöglichen nämlich bei dem erfindungsgemäss verwendeten Transportbehälter, dass die Dekkelstapel im zusammengedrückten Zustand in den Transportbehälter eingeführt werden können und dass die hierfür erforderliche Greifvorrichtung nach dem teilweisen Entspannen der Deckel auch aus dem Transportbehälter wieder herausgezogen werden kann. Es können pro Deckelstapel auf jeder stirnseitigen Begrenzungswand zwei Nuten vorgesehen sein, die symmetrisch zur Mitte des Deckelstapels liegen. Eine für diese Nuten geeignete Greifvorrichtung müsste gabelförmige Greifer aufweisen, deren Gabelzinken die Deckel symmetrisch zur Mitte des Deckelstapels erfassen.

Vorzugsweise ist aber für jeden Deckelstapel eine Nut vorgesehen, die mittig zum Deckelstapel liegt. Der Greifer kann dann einstückig und länglich ausgebildet sein und den Deckelstapel mittig erfassen.

Das Einführen der zusammengedrückten Dekkelstapel in den Transportbehälter von oben wird erleichtert, wenn die Begrenzungswände am oberen Ende des Transportbehälters schräg nach aussen verlaufen und somit eine Art Einlauftrichter bilden.

Der erfindungsgemässe verwendete Transportbehälter kann als stapelfähige, wannenformige Palette ausgebildet sein, auf die nur eine Lage Deckelstapel gebracht wird.

Der Transportbehälter kann aber auch als Gitterbox ausgebildet sein, in die stirnseitig die mit den Nuten versehenen Begrenzungswände bildende Auskleidungen eingebracht sind.

Die obenerwähnte Aufgabe wird weiterhin durch die Verwendung einer Vorrichtung zum Befüllen und Leeren von den erfindungsgemäß verwendeten Transportbehältern mit liegenden Deckelstapeln, die aus auf ihren Kanten stehenden und mit ihren Flachseiten aneinanliegenden und in Rinnen vorgeförderten Dosendeckeln bestehen, gelöst, wenn die Vorrichtung die beiden Enden eines abgeteilten Deckelstapels beaufschlagende Greifvorrichtungen aufweist, die zusammenfahrbar sind, und wenn die Greifvorrichtung horizontal verfahrbar und anschliessend in die Nuten der Begrenzungswände des Transportbehälters absenkbar ist.

Dabei ist vorzugsweise die Greifvorrichtung auf einem Portal seitlich verfahrbar, unter dem mindestens eine Rinne, der Transportbehälter und ein Vorratsmagazin in Verfahrrichtung des Portals nebeneinander angeordnet sind. Bei dieser Anordnung kann die Greifvorrichtung die Deckelstapel in der erwähnten Weise ergreifen, horizontal auf dem Portal über den Transportbehälter verfahren und dann in den Transportbehälter abgesenkt werden, um den Deckelstapel loszulassen, wobei sich dieser teilweise entspannt.

In einer bevorzugten Ausführungsform ist neben der Greifvorrichtung für die Deckelstapel eine weitere Greifvorrichtung in einem festen Abstand angeordnet, der dem Abstand zwischen Rinne und Transportbehälter einerseits und Transportbehälter und Vorratsmagazin andererseits entspricht.

Dabei sind vorzugsweise die Greifvorrichtungen gleichzeitig verfahrbar und so betätigbar, dass während des Deckelstapeltransportes mit der ersten Greifvorrichtung die weitere Greifvorrichtung einen Transport zwischen Vorratsmagazin und Transportbehälter ausführt.

Das Vorratsmagazin kann aufgestapelte Leerpaletten enthalten, wenn die Deckelstapel in Paletten eingebracht werden sollen, oder Zwischenlagen, wenn eine Gitterbox als Transportbehälter verwendet wird, in der die übereinander gestapelten Deckellagen durch eine Zwischenlage voneinander getrennt werden.

Da der Transport der Deckelstapel in die Verpakkung bzw. auch die Entstapelung weniger Zeit benötigt als die Vorförderung der Dosendeckel in der Förderrinne, ist es vorteilhaft, wenn unter dem Portal wenigstens zwei Stationen jeweils mit Rinne, Transportbehälter und Vorratsmagazin angeordnet sind, zwischen denen die Greifvorrichtung abwechselnd hin- und herfahrbar ist. Diese Anordnung eignet sich insbesondere zur Verpakkung der Deckelstapel, wobei die Greifvorrichtung automatisch durch die am Ende der Rinne aufgelaufenen Deckel abgerufen werden kann.

Die Erfindung soll im folgenden anhand von in der Zeichnung dargestellten Ausführungsbeispielen näher erläutert werden. Es zeigen:
Figur 1: eine Vorrichtung zum Befüllen von Paletten mit auf Förderrinnen vorgeförderten Deckelstapeln;
Figur 2: eine Vorrichtung gemäss Figur 1 zur Befüllung von Gitterboxen;
Figur 3: eine Seitenansicht der Vorrichtung gemäss Figur 2 in einer anderen Arbeitsstellung;
Figur 4: eine Greifvorrichtung für einen liegenden Deckelstapel:
Figur 5: eine Seitenansicht der Greifvorrichtung aus Figur 4;
Figur 6: einen zwischen zwei stirnseitigen Begrenzungswänden einer Gitterbox unter Vorspannung eingeklemmten Deckelstapel;
Figur 7: einen Deckelstapel gemäss Figur 6, der von der Greifvorrichtung um ein weiteres Stück zum Be- oder Entladen des Transportbehälters zusammengedrückt ist;
Figur 8: eine Ansicht auf die Anordnung aus Figur 7 von oben;
Figur 9: eine perspektivische Darstellung einer mit Innenverkleidungen versehenen Gitterbox;
Figur 10: ein Stapelschema für die Deckelstapel in einer Gitterbox;
Figur 11: eine Detaildarstellung von an einer stirnseitigen Begrenzungswand einer Gitterbox anliegenden Dosendeckeln;
Figur 12: eine Detaildarstellung von Dosendekkeln in einer geformten Palette;
Figur 13: eine Greifvorrichtung mit einer aus Haltemessern gebildeten Halterung für den Mittelbereich des Deckelstapels;
Figur 14: eine Detaildarstellung der Haltemesser mit Zentriereinrichtung aus Figur 13.

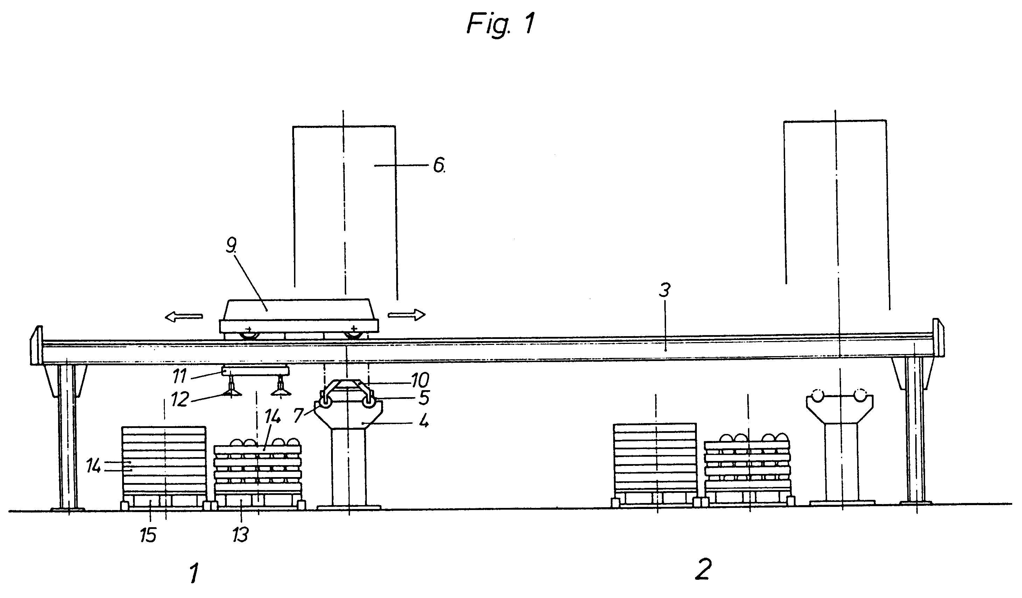

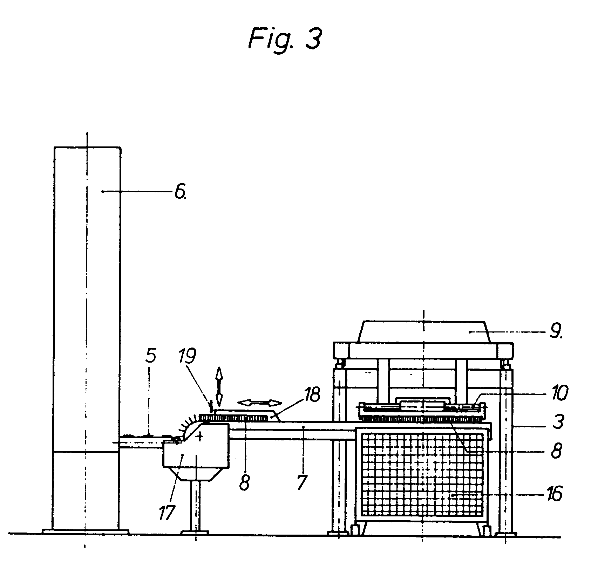

Figur 1 zeigt schematisch zwei Beladestationen 1, 2, die unter einem gemeinsamen Portal 3 angeordnet sind. Die Stationen 1, 2 weisen jeweils eine Förderrinnenanordnung 4 auf, mit der Dosendekkel 5 von einem schematisch angedeuteten Trokkenofen 6 vorgefördert werden. Die Förderung in den Rinnen 7 erfolgt mit auf ihren Kanten stehenden Dosendeckeln 5, die bereits zu liegenden Dekkelstapeln 8 (Figur 3) abgeteilt sind.

Auf dem Portal 3 ist ein Wagen 9 seitlich verfahrbar, an dem eine erste Greifvorrichtung 10 für die Deckelstapel 8 befestigt ist. Neben der ersten Greifvorrichtung 10 befindet sich eine zweite Vorrichtung 11, die mit Saugern 12 ausgestattet ist. Neben der Rinnenanordnung 4 befinden sich Transportbehälter 13 in Form von Leerpaletten 14. Die Leerpaletten sind zu einer Transporteinheit aufeinander stapelbar.

Wiederum neben dem Transportbehälter 13 befindet sich ein Vorratsmagazin 15, das im vorliegenden Fall aus aufeinandergestapelten Leerpaletten 14 besteht.

Die beschriebene Vorrichtung arbeitet wie folgt:

Die erste Greifvorrichtung, die im vorliegenden Fall entsprechend den beiden Rinnen 7 der Rinnenanordnung 4 doppelt ausgebildet ist, ergreift zwei Deckelstapel 8 und wird daraufhin angehoben. Der Wagen verfährt um eine Position nach links, so dass die erste Greifvorrichtung 10 über den Transportbehältern 13 steht. Dort werden die Deckelstapel 8 abgesenkt und in unten näher beschriebener Weise in den Transportbehälter 13, also hier die zu füllende Leerpalette 14, gelegt. Werden dabei die letzten beiden freien Reihen der oberen Leerpalette 14 gefüllt, steht die zweite Greifvorrichtung 11 genau über dem Vorratsmagazin 1 5 und wird gleichzeitig mit der ersten Greifvorrichtung 10 abgesenkt. Die Sauger greifen sich die oberste Leerpalette 14 aus dem Vorratsmagazin 15. Beide Greifvorrichtungen 10, 11 werden dann wieder angehoben. Beim Zurückverfahren des Wagens 9 gelangt nun die zweite Greifvorrichtung 11 mit der angesaugten Einzelpalette 14 über die Vorratsbehälter 13 und die erste Greifvorrichtung 10 über die Rinnenanordnung 4. Beim gemeinsamen Absenken beider Greifvorrichtungen 10, 11 legt die zweite Greifvorrichtung eine Leerpalette 1 4 auf die befüllten Paletten, und die erste Greifvorrichtung 10 erfasst neue Deckelstapel 8.

Da diese Vorgänge in Relation zur Vorfördergeschwindigkeit der Dosendeckel 5 in den Rinnen 7 relativ schnell abgewickelt werden können, kann mit demselben Wagen auch die zweite Beladestation 2 bedient werden. Selbstverständlich kann hier eine Bedarfssteuerung vorgesehen werden, so dass die Ladestation 1 bzw. 2 den Wagen 9 jeweils vorrangig ruft, an der zuerst ein abnehmbarer Dekkelstapel 8 zur Verfügung steht.

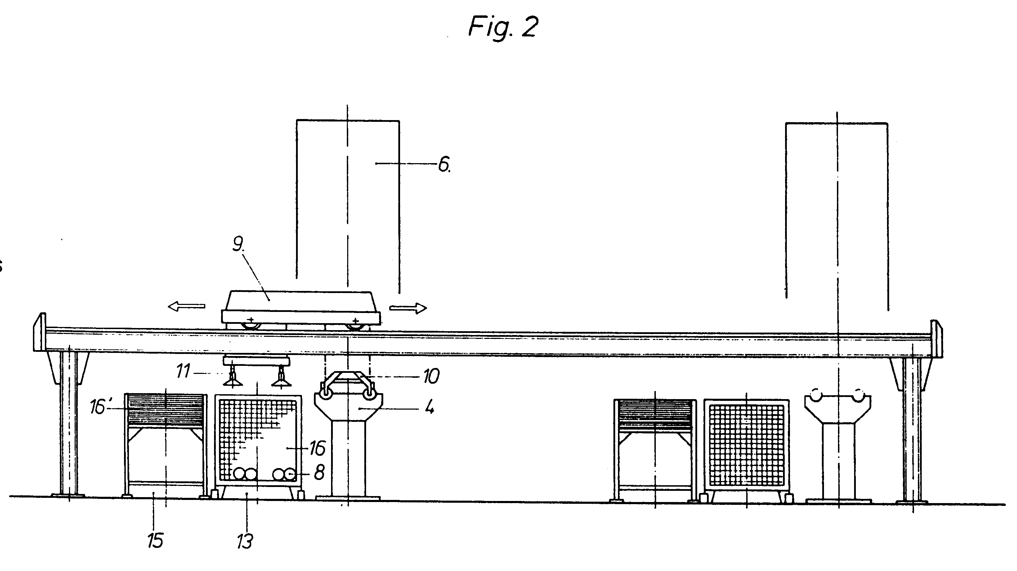

Figur 2 zeigt eine völlig identische Anordnung zu Figur 1, die jedoch in diesem Fall zur Befüllung von Gitterboxen 16 als Transportbehälter 13 dient. In diesem Fall ist das Vorratsmagazin 15 mit dünnen Zwischenlagen 16 gefüllt, die jeweils durch die zweite Greifvorrichtung 11 in die Gitterbox 16 eingelegt werden, wenn eine Schicht der Gitterbox 16 komplett gefüllt ist, im dargestellten Ausführungsbeispiel mit sechs Deckelstapeln 8.

Die Seitenansicht der Figur 3 verdeutlicht, dass die Dosendeckel 5 einzeln und flachliegend den Ofen 6 verlassen und durch eine Umklappvorrichtung 17 in der Förderrinne 7 auf ihre Kanten gestellt werden, so dass die Dosendeckel 5 mit ihren Flachseiten aneinanderliegen. Dabei werden die Dosendeckel 5 durch eine rahmenförmige Haltevorrichtung 18 als liegender Stapel 8 gehalten. Nach einer ausreichenden Anzahl von Dosendekkeln fährt ein Trennglied 19 in den Weg der nachfolgenden Dosendeckel ein, so dass sofort eine Abtrennung des Deckelstapels 8 von dem nächsten erfolgt. Die jeweiligen Deckelstapel 8 werden in der Rinne 7 vorgefördert und können dann von der ersten Greifvorrichtung 10 ergriffen werden.

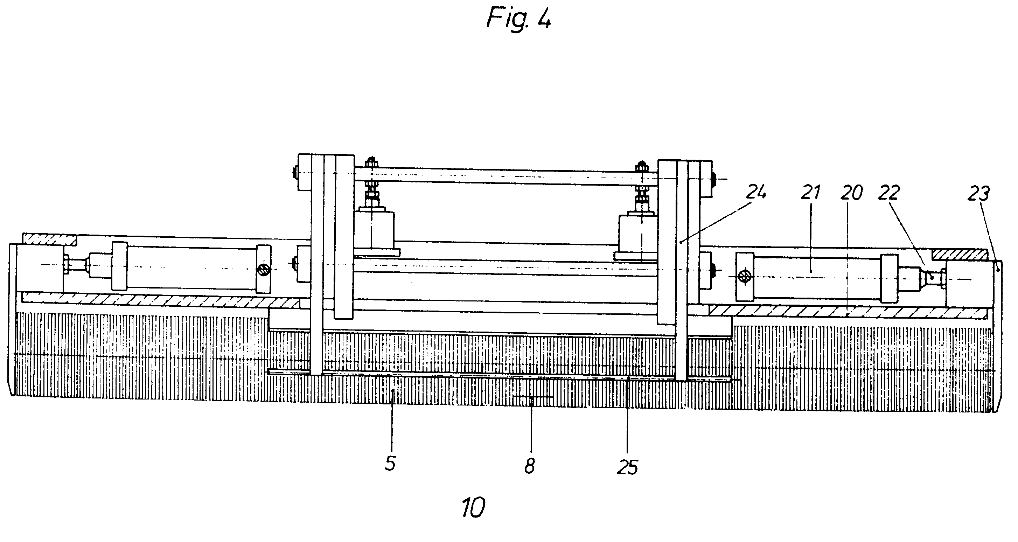

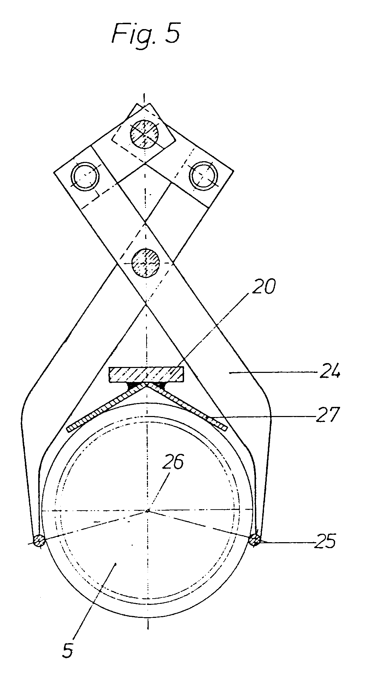

Die Greifvorrichtung 10 ist in den Figuren 4 und 5 deutlicher dargestellt. Sie besteht aus einer Grundplatte 20, auf der zwei Steuerzylinder 21 befestigt sind, deren Kolben 22 mit jeweils einem Greifer 23 verbunden ist. Die Greifer 23 sind mittels der Kolben 22 aufeinander zu- und voneinander wegbewegbar. Im mittleren Bereich der Greifvorrichtung 10 befindet sich eine scherenförmige Hebelanordnung 24, an deren Enden zwei auf beiden Seiten des Deckelstapels 8 angreifende, parallel zur Achse des Deckelstapels 8 verlaufende Stangen 25 befestigt sind. Mit der Hebelanordnung 24 können die Stangen 25 gegen die Deckel 5 im mittleren Bereich des liegenden Deckelstapels 8 gedrückt werden. Die Stangen 25 greifen unterhalb der Deckelmitte 26 an den Deckeln 5 an, wenn die Deckel 5 oben gegen einen dachförmigen Anschlag 27 anliegen, der mit der Grundplatte 20 verbunden ist.

Die Stangen 25 dienen zur Verhinderung eines Durchhängens des Deckelstapels 8, wenn dieser an seinen Enden von den Greifern 23 ergriffen wird. Die Steuerzylinder 21 sind so ausgebildet, dass die Greifer weiter zusammenfahrbar sind, als dies der Länge des auf der Rinne 7 abgeteilten Deckelstapels 8 entspricht. Demzufolge kann die Greifvorrichtung 10 den Deckelstapel um ein gewisses Mass zusammendrücken, wobei der Dekkelstapel 8 eine elastische Rückstellkraft erzeugt.

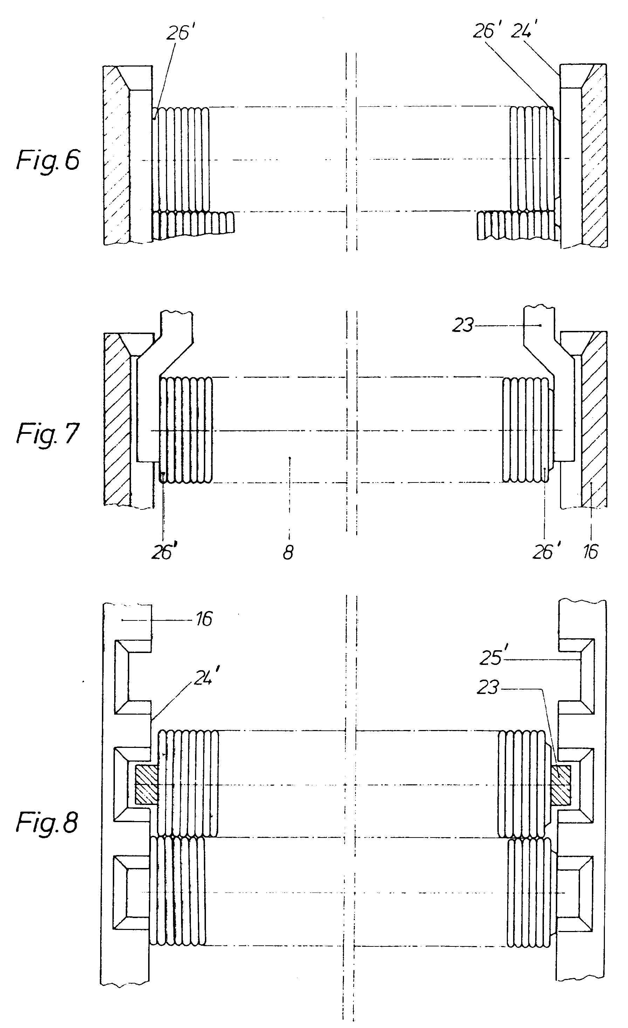

In der von der Greifvorrichtung 10 gehaltenen und zusammengedrückten Form wird der Deckelstapel 8 in den Transportbehälter 13 von oben abgesenkt. Figur 7 zeigt diese Situation bei einer Gitterbox 16. Um das Absenken des zusammengedrückten Deckelstapels 8 mit den Greifern 23 zu ermöglichen, weisen die stirnseitigen Begrenzungswände 24' der Gitterbox 16 zur Innenwand hin offene Nuten 25' auf, in die die Greifer 23 einfahren können. Nach dem Einfahren in die gewünschte vertikale Position fahren die Greifer 23 von den Zylindern 21 gesteuert auseinander, so dass die Enddeckel 26' an den stirnseitigen Begrenzungswänden 24' unter dem Druck der elastischen Rückstellkraft des Deckelstapels 8 anliegen. Die Greifer 23 können in den Nuten 25' nach oben aus der Gitterbox 16 herausgefahren werden.

Figur 8 zeigt eine Ansicht von oben auf einen durch die Greifer 23 gehaltenen und zusammengedrückten Deckelstapel 8 und einen daneben angeordneten, bereits teilweise entspannten Deckelstapel 8 in einer Gitterbox 16.

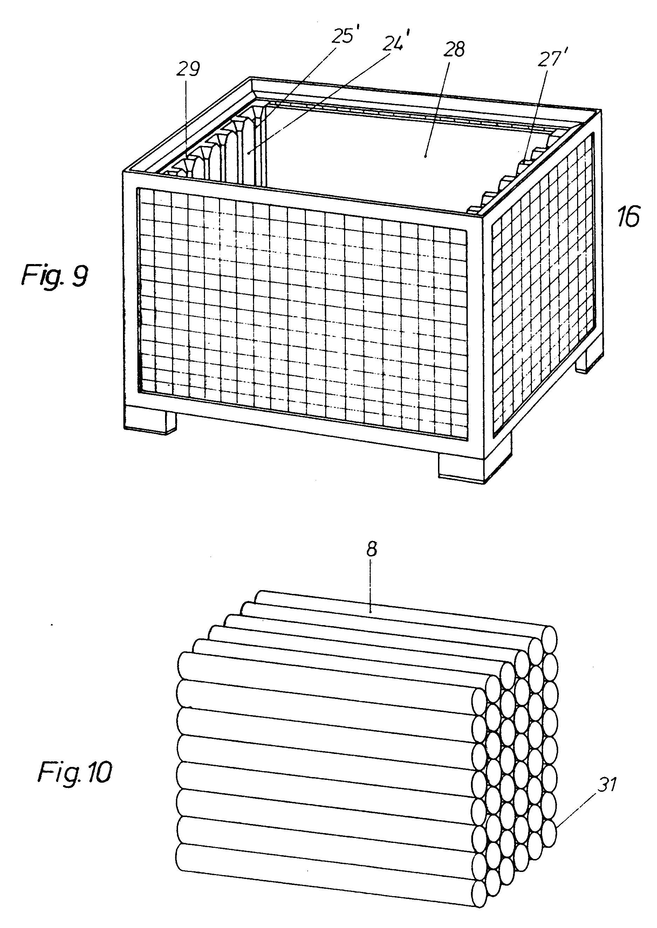

Eine derartige Gitterbox 16 ist in Figur 9 perspektivisch dargestellt. Die Wände der Gitterbox 16 sind als Drahtgitter ausgebildet. In dieser Form sind Gitterboxen 16 handelsüblich. Zur Verwendung als Transportbehälter für die Dosendeckel 5 weist die in Figur 9 dargestellte Gitterbox 16 eine Innenverkleidung 27' auf, die an den Längsseitenwänden 28 eben ist und an den Stirnseiten 29 die stirnseitige Begrenzungswand 24' mit den Nuten 25' bildet.

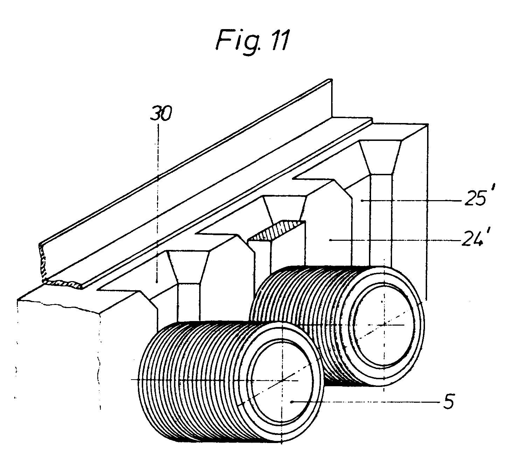

Figur 11 verdeutlicht, dass die drei Nutwände zum oberen Ende der Gitterbox 16 hin eine konische Erweiterung 30 aufweisen, so dass die Nuten ein oberes trichterartiges Einlaufteil aufweisen. In gleicher Weise können die stirnseitigen Begrenzungswände 24' nach oben hin konisch erweitert sein, um einen entsprechenden Einlaufraum für die Deckel 5 zu schaffen.

Figur 10 zeigt ein Stapelschema für Deckelstapel 8 in einer Gitterbox 16. Sechs Deckelstapel 8 bilden jeweils eine Stapellage 31, die von der darüber liegenden Stapellage 31 durch eine Zwischenlage 16 getrennt wird. Wegen der Anordnung der Nuten 25' wird die Stapelung in vertikaler Richtung streng fluchtend vorgenommen.

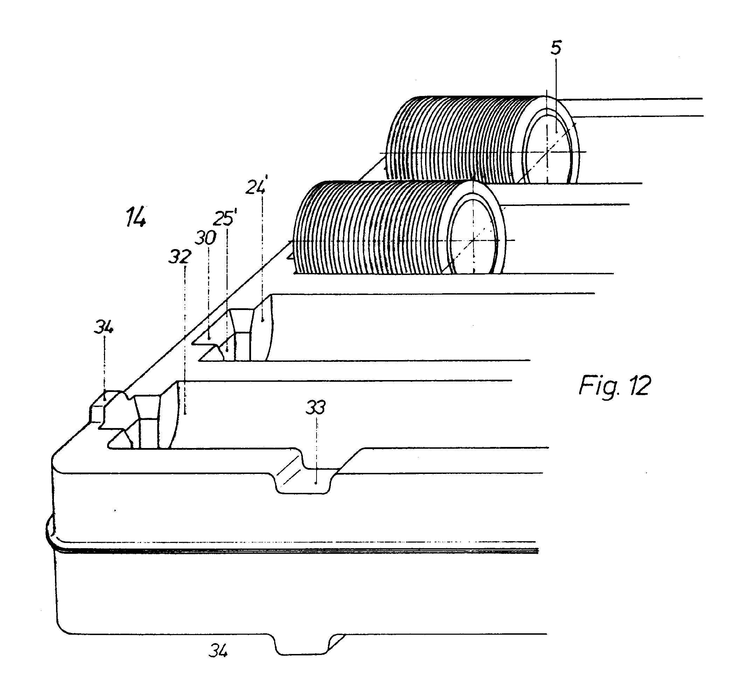

Figur 12 zeigt schliesslich Dosendeckel 5 eines Deckelstapels 8, die in analoger Weise teilweise entspannt in einem rinnenförmig geformten Boden 32 einer Einzelpalette 14 sitzen. Auch die Palette 14 weist stirnseitige Begrenzungswände 24' auf, die für jede Rinne jeweils eine Nut 25' mit einer konischen Erweiterung 30 am oberen, offenen Ende sitzen. Die Ränder der Einzelpalette 1 4 sind mit Stapelvertiefungen 33 bzw. Stapelnasen 34 versehen, die jeweils miteinander fluchten und eine Stapelhilfe für das Übereinanderstapeln der leeren Einzelpaletten 14 zu einem als Vorratsmagazin 15 dienenden Palettenstapel ermöglichen.

Es ist ohne weiteres ersichtlich, dass die beschriebenen Anordnungen nicht nur für das Beladen der Transportbehälter 13 mit den Deckelstapeln 8, sondern auch für das Entladen geeignet sind. Beim Entladen laufen die beschriebenen Vorgänge in der umgekehrten Reihenfolge ab, d. h. der teilweise entspannte, im Vorratsbehälter 13 sitzende Deckelstapel 8 wird durch die über die Nuten 25' eingefahrenen Greifer 23 ergriffen und zusammengedrückt, wodurch er aus dem Transportbehälter 13 herausgehoben werden kann. Der ergriffene Stapel wird in einer Förderrinne 7 abgesetzt und zur Weiterverarbeitung abgefördert. Ist eine Stapellage 31 geleert, ergreift die zweite Greifvorrichtung 11 im Falle der Gitterbox 16 die Zwischenlage 16' und im Falle der Einzelpaletten 14 die geleerte Einzelpalette 14 und transportiert diese in das Vorratsmagazin 15.

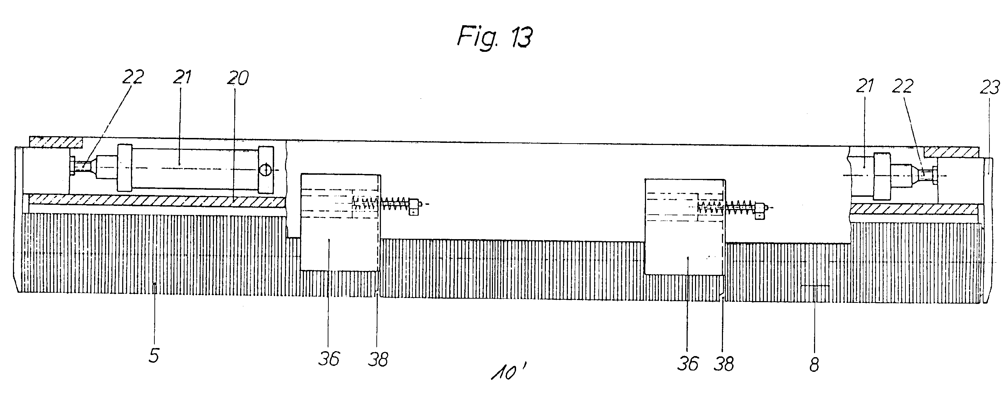

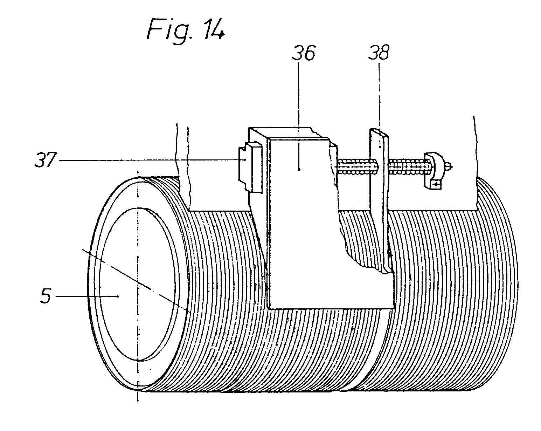

Die Figuren 13 und 14 zeigen eine alternative Greifvorrichtung 10', bei der der Deckelstapel 8 in seinem Mittelbereich durch in den Deckelstapel 8 eingefahrene Haltemesser 38 gehalten und damit vor einem evtl. Durchhängen bewahrt wird. Beim Einfahren der Haltemesser 38 in den Deckelstapel 8, das beim Absenken der Greifvorrichtung 10' geschieht, wird eine genaue Zentrierung der Greifvorrichtung 10' zum Deckelstapel 8 durch seitliche Justierbleche 36 gewährleistet. die an Führungsschienen 37 gelagert sind (Fig. 14). Die Haltemesser 38 sind auf dieser Führungsschiene 37 parallel zur Längsachse des Deckelstapels gegen Federn verschiebbar, um das Einschieben in den Deckelstapel 8 zu erleichtern und eine Verschiebung der Einzeldeckel beim Zusammendrücken des Deckelstapels 8 durch die Greifvorrichtung 10' zu ermöglichen.

## Patentansprüche

1. Verfahren zum Transportieren von aus Blech ausgestanzten, mit Profilrillungen versehenen , mit ihren Flachseiten aneinanderliegenden auf ihren Kanten stehenden Dosendeckeln (5), die beim Aneinanderliegen jeweils in benachbarte Profilvertiefungen eingreifen , in Stapeln (8) in einem Transportbehälter (13), dadurch gekennzeichnet, dass die Deckelstapel (8) zum Einladen in den Transportbehälter (13) an den Enden ergriffen und in Axialrichtung des Deckelstapels (8) um ein gewisses Mass zusammengedrückt werden und dass die Länge des Deckelstapels (8) in Relation zur entsprechenden Länge des Innenraums des Transportbehälters (13) so gewählt wird, dass sich der Deckelstapel (8) in dem Transportbehälter (13) nur teilweise wieder entspannen kann, so daß die Enddeckel (26') des Deckelstapels (8) an den stirnseitigen Begrenzungswänden (24') des Transportbehälters (13) unter dem Druck der elastischen Rückstellkraft des Druckstapels (8) anliegen.

2. Verfahren nach Anspruch 1, dadurch gekennzeichnet, dass zum Entladen des Deckelstapels (8) aus dem Transportbehälter (13) der jeweilige Deckelstapel (8) an seinen Enden ergriffen und um ein gewisses Mass zusammengedrückt wird.

3. Verfahren nach Anspruch 1 oder 2, dadurch gekennzeichnet, dass der Deckelstapel (8) in seinem mittleren Bereich zusätzlich gehalten wird.

4. Verwendung eines Transportbehälters (13), der von oben zu beladen bzw. zu entladen ist, mit stirnseitigen Begrenzungswänden (24'), an denen Enddeckel (26') von Deckelstapeln (8) zur Anlage kommen, zur Durchführung des Verfahrens nach einem der Ansprüche 1 bis 3, dadurch gekennzeichnet, dass die Begrenzungswände (24') in den Bereichen, in denen die Deckelstapel (8) zur Anlage kommen, zur Innenseite der Begrenzungswände (24') offene Nuten (25') aufweisen, deren Breite wesentlich kleiner ist als die Breite der Deckelstapel (8).

5. Verwendung eines Transportbehälters nach Anspruch 4, dadurch gekennzeichnet, dass für jeden Deckelstapel (8) eine Nut (25') vorgesehen ist.

6. Verwendung eines Transportbehälters nach Anspruch 4 oder 5, dadurch gekennzeichnet, dass die Nutwände am oberen Ende des Transportbehälters eine konische Erweiterung (30) aufweisen.

7. Verwendung eines Transportbehälters nach einem der Ansprüche 4 bis 6, dadurch gekennzeichnet, dass er als stapelfähige, wannenförmige Palette (14) ausgebildet ist

8. Verwendung eines Transportbehälters nach Anspruch 7, dadurch gekennzeichnet, dass der Boden (32) der Palette zur Aufnahme der liegenden Deckelstapel (8) rinnenförmig geformt ist.

9. Verwendung eines Transportbehälters als Gitterbox (16) ausgebildet, nach einem der Ansprüche 4 bis 6, dadurch gekennzeichnet, dass in die Gitterbox (1 6) stirnseitig die mit den Nuten (25') versehenen Begrenzungswände (24') bildende Auskleidungen (27') eingebracht sind.

10. Verwendung eines Transportbehälters nach Anspruch 9, dadurch gekennzeichnet, dass zwischen den von unten nach oben geschichteten Deckelstapeln (8) jeweils eine ebene Zwischenlage (16') eingelegt ist.

11. Verwendung einer Vorrichtung (9, 10, 10', 11) zum Befüllen und Leeren von Transportbehältern verwendet nach einem der Anspruche 4 bis 10 mit liegenden Deckelstapeln (8), die aus auf ihren Kanten stehenden und mit ihren Flachseiten aneinanderliegenden und in Rinnen (7) vorgeförderten Dosendeckeln (5) bestehen, gemäss dem Verfahren nach einem der Ansprüche 1 bis 3, dadurch gekennzeichnet, dass die Vorrichtung die beiden Enden eines abgeteilten Deckelstapels (8) beaufschlagende Greifvorrichtungen (10, 10') aufweist, die zusammenfahrbar sind, und dass die Greifvorrichtung (10. 10') horizontal verfahrbar und anschliessend in die Nuten (25') der Begrenzungswände (24') des Transportbehälters (13) absenkbar ist.

12. Verwendung einer Vorrichtung nach Anspruch 11, dadurch gekennzeichnet, dass die Greifvorrichtung (10) seitlich am Ende einer Hebelanordnung (24) jeweils ein parallel der Längsachse des Deckelstapels (8) angeordnete, unterhalb der Längsachse aufeinanderzubewegliche Stangen (25) aufweist.

13. Verwendung einer Vorrichtung nach Anspruch 1 2, dadurch gekennzeichnet, dass über die Länge der Stangen (25) oberhalb des Deckelstapels (8) ein dachförmiger Anschlag (27) vorgesehen ist.

14. Verwendung einer Vorrichtung nach Anspruch 11, dadurch gekennzeichnet, dass die Greifvorrichtung (10') in den Deckelstapel (8) einfahrbare Haltemesser (38) aufweist.

15. Verwendung einer Vorrichtung nach Anspruch 14, dadurch gekennzeichnet, dass die Haltemesser (38) in Axialrichtung der Greifvorrichtung (10') federnd verschiebbar gelagert sind.

16. Verwendung einer Vorrichtung nach Anspruch 14 oder 1 5, dadurch gekennzeichnet, dass neben den Haltemessern (38) eine den Deckelstapel (8) von oben ergreifende Zentriereinrichtung (36) angeordnet ist.

17. Verwendung einer Vorrichtung nach einem der Ansprüche 11 bis 16, dadurch gekennzeichnet, dass die Greifvorrichtung (10, 10') auf einem Portal (3) seitlich verfahrbar ist, unter dem mindestens eine Rinne (7), der Transportbehälter (13) und ein Vorratsmagazin (15) in Verfahrrichtung des Portals (3) nebeneinander angeordnet sind.

18. Verwendung einer Vorrichtung nach Anspruch 17, dadurch gekennzeichnet, dass neben der Greifvorrichtung (10, 10') für die Deckelstapel (8) eine weitere Greifvorrichtung (11) in einem festen Abstand angeordnet ist, der dem Abstand zwischen Rinnenanordnung (4) und Transportbehälter (13) einerseits und Transportbehälter (13) und Vorratsmagazin (15) andererseits entspricht.

19. Verwendung einer Vorrichtung nach Anspruch 18, dadurch gekennzeichnet, dass die Greifvorrichtungen (10, 10', 11) gleichzeitig verfahrbar und so betätigbar sind, dass während des Deckelstapeltransports mit der ersten Greifvorrichtung (10) die weitere Greifvorrichtung (11) einen Transport zwischen Vorratsmagazin (15) und Transportbehälter (13) ausführen kann.

20. Verwendung einer Vorrichtung nach einem der Ansprüche 11 bis 19, dadurch gekennzeichnet, dass unter dem Portal (3) wenigstens zwei Stationen (1, 2) jeweils mit Rinnenanordnung (4), Transportbehälter (13) und Vorratsmagazin (15) angeordnet sind, zwischen denen die Greifvorrichtung (10, 10') wechselnd hin- und herfahrbar ist.

21. Verwendung einer Vorrichtung nach einem der Ansprüche 11 bis 20, dadurch gekennzeichnet, dass das Vorratsmagazin (15) aus aufeinandergestapelten Leerpaletten (14) besteht.

22. Verwendung einer Vorrichtung nach einem der Ansprüche 11 bis 21, dadurch gekennzeichnet, dass das Vorratsmagazin (15) Zwischenlagen (16') enthält, die nach dem Befüllen einer Lage (31) von Dosendeckelstapeln (8) in den Transportbehälter (13) mittels der zweiten Greifvorrichtung (11) einlegbar sind.

## Claims

1. Method for transporting can lids (5) punched from a plate and provided with profile grooves, abutting each other with their plane surfaces and standing on their edges while engaging into adjacent grooves, in stacks (8) in a transport box (13), characterized in that, for the loading into the transport box (13), the lid stacks (8) are grasped at the ends and are pressed together for a certain amount in the axial direction of the lid stacks (8) and that the length of the lid stack (8) is chosen in relation to the corresponding length of the interior space of the transport box (13) in that manner that the lid stack (8) can only re-expand partly in the transport box (13) so that end lids (26') of the lid stack (8) abut facing boundary walls (24') of transport box (13) under the pressure of resilient restoring force of lid stack (8).

2. Method according to claim 1, characterized in that for the unloading of the lid stack (8) from the transport box (13) the respective lid stack (8) is grasped at its ends and pressed together for a certain amount.

3. Method according to claim 1 or 2, characterized in that the lid stack (8) is held additionally in its middle region.

4. Use of transport box (13) to be loadable or unloadable, respectively, from the top, with facing boundary walls (24'), end lids (26') of lid stacks (8) abutting said walls (24'), adapted for the method according to one of the claims 1 to 3, characterized in that, in the regions where the lid stacks (8) abut, the boundary walls (24') comprise grooves (25') which are open to the interior side of the boundary walls (24'), the width of said grooves being essentially smaller than the width of the lid stack (8).

5. Use of transport box according to claim 4, characterized in that for each lid stack (8) a groove is provided.

6. Use of transport box according to claim 4 or 5, characterized in that the groove walls comprise a conical enlargement (30) at the upper end of the transport box.

7. Use of transport box according to one of the claims 4 to 6, characterized in that said transport box is formed as a trough-shaped pallet (14).

8. Use of transport box according to claim 7, characterized in that the bottom (32) of the pallet for holding the lying lid stack (8) is formed like a groove.

9. Use of transport box formed as skeleton container (16), according to one of the claims 4 to 6, characterized in that linings (27') forming the facing boundary walls (24') provided with grooves (25') are placed in the skeleton container (16).

10. Use of transport box according to claim 9, characterized in that between each two lid stacks (8) stacked from the bottom towards the top one even intermediate layer (16') is inserted.

11. Use of device (9, 10, 10', 11) for the loading and unloading transport boxes used according to one of the claims 4 to 10 with lying lid stacks (8), comprising can lids (5) standing on their edges, adjacent with their plane surfaces and conveyed in grooves (7) according to the method of one of the claims 1 to 3, characterized in that the device comprises gripping devices (10, 10') movable towards each other and acting upon the two ends of a separated lid stack (8) and that the gripping device (10, 10') is horizontally movable and can subsequently be lowered into the grooves (25') of the boundary walls (24') of the transport box (13).

12. Use of device according to claim 11, characterized in that the gripping device (10) comprises bars (25) which are arranged at the end of a lever arrangement (24) parallely to the longitudinal axis of the lid stack (8) on each side, and which are movable against each other below the longitudinal axis.

13. Use of device according to claim 12, characterized in that along the length of the bars (25) a roof-shaped stop (27) is provided, above the lid stack (8).

14. Use of device according to claim 11, characterized in that the gripping device (10') comprises holding knives (38) insertable into the lid stack (8).

15. Use of device according to claim 14, characterized in that the holding knives (38) are supported resiliently movable in axial direction of the gripping device (10').

16. Use of device according to claim 14 or 15, characterized in that adjacent to the holding knives (38) a centering device (36) is arranged abutting the top of the lid stack (8).

17. Use of device according to one of the claims 11 to 16, characterized in that the gripping device (10, 10') is laterally traversable on a portal (3) below which at least a groove (7), the transport box (13) and a storage magazine (15) are arranged side-by-side in the moving direction of the portal (3).

18. Use of device according to claim 17, characterized in that aside from the gripping device (10, 10') for the lid stack (8) a further gripping device (11) is arranged in a fixed distance, corresponding to the distances between groove arrangement (4) and transport box (13) on the one hand and between transport box (13) and storage magazine (15) on the other hand.

19. Use of device according to claim 18, characterized in that the gripping devices (10, 10', 11) are simultaneously movable and controllable in that manner that during the transport of lid stacks with the first gripping device (10) the other gripping device (11) can operate a transport between storage magazine (15) and transport box (13).

20. Use of device according to one of the claims 11 to 19, characterized in that below the portal there are at least two stations (1, 2) with groove arangement (4), transport box (13) and storage magazine (15) each, between which the gripping device (10, 10') is alternately movable to-and-fro.

21. Use of device according to one of the claims 11 to 20, characterized in that the storage magazine (15) is formed of empty pallets (14).

22. Use of device according to one of the claims 11 to 21, characterized in that the storage magazine (15) contains intermediate layers (16') which, after the filling of a layer (31) of lid stacks (8), are insertable into the transport box (13) by means of the second gripping device (11).

## Revendications

1. Procédé pour transporter, en piles (8) dans un conteneur (13), des couvercles (5) de boîtes en tôle matricée munis de rainures profilées, qui s'appuient l'un contre l'autre par leurs faces planes et reposent verticalement sur leurs bords, et qui s'emboîtent, lorsqu'ils sont en appui l'un contre l'autre, dans des évidements profilés respectifs, caractérisé en ce que, pour leur chargement dans le conteneur (13), on saisit les piles de couvercles (8) aux extrémités et on les comprime d'une certaine valeur dans la direction axiale de la pile de couvercles (8); et en ce que l'on choisit la longueur de la pile de couvercles (8), par rapport à la longueur correspondante du volume intérieur du conteneur (13) de façon telle que la pile de couvercles (8) ne peut se détendre que partiellement dans le conteneur (13), de sorte que les couvercles (26') situés aux extrémités de la pile (8) de couvercles s'appuient contre les parois frontales (24') de terminaison du conteneur de transport (13) sous l'effet de la force de rappel élastique de la pile (8) de couvercles.

2. Procédé selon la revendication 1, caractérisé en ce que, pour décharger la pile de couvercles (8) hors du conteneur (13), on saisit la pile respective de couvercles (8) par ses extrémités et on la comprime d'une certaine valeur.

3. Procédé selon la revendication 1 ou 2, caractérisé en ce que l'on maintient en outre la pile de couvercles (8) dans sa zone médiane.

4. Utilisation d'un conteneur (13) à charger ou à décharger de par en haut, comportant des parois frontales de terminaison (24') contre lesquelles les couvercles d'extrémité (26') des piles de couvercles (8) viennent en butée, pour l'exécution du procédé selon l'une des revendications 1 à 3, caractérisée en ce que les parois de terminaison (24') présentent, dans les zones dans lesquelles les piles de couvercles (8) viennent en butée, des rainures (25') qui sont ouvertes en direction de la face intérieure des parois de terminaison (24') et dont la largeur est sensiblement inférieure à la largeur des piles de couvercles (8).

5. Utilisation d'un conteneur selon la revendication 4, caractérisée en ce que pour chaque pile de couvercles (8) est prévue une rainure (25').

6. Utilisation d'un conteneur selon la revendication 4 ou 5, caractérisée en ce que les parois des rainures présentent un élargissement conique (30) à l'extrémité supérieure du conteneur.

7. Utilisation d'un conteneur selon l'une des revendications 4 à 6, caractérisée en ce que le conteneur est conçu comme palette (14) empilable, en forme de cuve.

8. Utilisation d'un conteneur selon la revendication 7, caractérisée en ce que le fond (32) de la palette est prévu en forme de goulotte pour recevoir la pile de couvercles (8) placée horizontalement.

9. Utilisation d'un conteneur conçu comme caisse grillagée (16), selon l'une des revendications 4 à 6, caractérisée en ce que dans la caisse grillagée (16) sont rapportés, sur les faces frontales, les revêtements (25') qui forment les parois de terminaison (24') munies de rainures (25').

10. Utilisation d'un conteneur selon la revendication 9, caractérisée en ce qu'entre les piles de couvercles (8) disposées de bas en haut en couches successives, est chaque fois insérée une feuille intermédiaire plane (16').

11. Utilisation d'un dispositif (9, 10, 10', 11) pour remplir et vider des conteneurs utilisés selon l'une des revendications 4 à 10, avec des piles de couvercles (8) placées horizontalement et constituées de couvercles de boîtes (5) qui reposent verticalement sur leurs bords, s'appuient l'un contre l'autre par leurs faces plates et sont prétransportés dans des goulottes (7), conformément au procédé selon l'une des revendications 1 à 3, caractérisée en ce que le dispositif présente des dispositifs de saisie (10, 10') qui interviennent sur les deux extrémités d'une pile de couvercles (8) détachée et qui peuvent venir l'un vers l'autre; et en ce que le dispositif de saisie (10, 10') peut se déplacer horizontalement et peut ensuite descendre dans les rainures (25') des parois de terminaison (24') du conteneur (13).

12. Utilisation d'un dispositif selon la revendication 11, caractérisée en ce que le dispositif de saisie (10) présente latéralement, à l'extrémité d'un mécanisme à leviers (24) des barreaux (25) respectivement disposés parallèlement à l'axe longitudinal de la pile de couvercles (8) et mobiles en direction l'un de l'autre en dessous de cet axe longitudinal.

13. Utilisation d'un dispositif selon la revendication 12, caractérisée en ce que sur toute la longueur des barreaux (25), au-dessus de la pile de couvercles (8), est prévue une butée en forme de toit (27).

14. Utilisation d'un dispositif selon la revendication 11, caractérisée en ce que le dispositif de saisie (10') présente des couteaux de maintien (38) qui peuvent s'insérer dans la pile de couvercles (8).

15. Utilisation d'un dispositif selon la revendication 14, caractérisée en ce que les couteaux de maintien (38) sont montés de façon à pouvoir coulisser élastiquement en direction axiale du dispositif de saisie (10').

16. Utilisation d'un dispositif selon la revendication 14 ou 15, caractérisée en ce qu'à côté des couteaux de maintien (38) est disposé un dispositif de centrage (36) qui saisit la pile de couvercles (8) par en haut.

17. Utilisation d'un dispositif selon l'une des revendications 11 à 16, caractérisée en ce que le dispositif de saisie (10, 10') peut se déplacer latéralement sur un portique (3) sous lequel sont disposés, l'un à côté de l'autre dans le sens de déplacement du portique (3), au moins une goulotte (7), le conteneur (13) et un magasin (15).

18. Utilisation d'un dispositif selon la revendication 17, caractérisée en ce qu'à côté du dispositif de saisie (10, 10') pour la pile de couvercles (8), est disposé un autre dispositif de saisie (11), à une distance fixe qui correspond à la distance entre le mécanisme à goulottes (4) et le conteneur (13) d'une part et entre le conteneur (13) et le magasin (15) d'autre part.

19. Utilisation d'un dispositif selon la revendication 18, caractérisé en ce que les dispositifs de saisie (10, 10', 11) peuvent se déplacer simultanément et être manoeuvrés de façon telle que pendant le transport de la pile de couvercles à l'aide du premier dispositif de saisie (10), l'autre dispositif de saisie (11) peut effectuer un transport entre le magasin (15) et le conteneur (13).

20. Utilisation d'un dispositif selon l'une des revendications 11 à 19, caractérisée en ce que sous le portique (3) sont disposées au moins deux stations (1, 2) comportant respectivement mécanisme à goulottes (4), conteneur (13) et magasin (15), entre lesquels le dispositif de saisie (10, 10') peut effectuer alternativement un va-et-vient.

21. Utilisation d'un dispositif selon l'une des revendications 11 à 20, caractérisée en ce que le magasin (15) est constitué de palettes vides (14) empilées l'une sur l'autre.

22. Utilisation d'un dispositif selon l'une des revendications 11 à 21, caractérisée en ce que le magasin (15) contient des feuilles intermédiaires (16') pouvant être insérées dans le conteneur (13) au moyen du second dispositif de saisie (11) après remplissage d'une couche (31) de piles de couvercles de boîtes (8).
